# EUROPEAN PATENT SPECIFICATION

(11) **EP 4 265 946 B1**
(45) Date of publication and mention of the grant of the patent: **02.07.2025**
(21) Application number: 22168935.9
(22) Date of filing: 20.04.2022
(51) Int. Cl.: F16K 15/06, F16K 47/00, F16K 11/10

(54) **CHECK VALVE AND DUAL CHECK VALVE WITH IMPROVED DAMPING**
RÜCKSCHLAGVENTIL UND DOPPELRÜCKSCHLAGVENTIL MIT VERBESSERTER DÄMPFUNG
CLAPET DE RETENUE ET CLAPET DE RETENUE DOUBLE À AMORTISSEMENT AMÉLIORÉ

(43) Date of publication of application: 25.10.2023
(73) Proprietor: ZF CV Systems Europe BV, 1170 Brüssel (BE)
(72) Inventor: KOSTRZEWA, Kamil, 52-233 Wroclaw (PL); SOBCZAK, Bartosz, 62-872 Godziesze Male (PL)
(74) Representative: Copi, Joachim

(56) References cited:
- EP-A1- 3 680 484
- EP-A2- 1 798 351
- CN-A- 110 513 514
- JP-A- 2012 007 639
- JP-A- S5 028 031
- JP-U- S5 117 828
- KR-B1- 100 985 814
- US-A- 4 489 752
- US-A1- 2013 312 853
- US-B1- 6 443 182

## Description

The present invention is directed to a dual check valve, in particular for use in air-processing products, including, but not limited to, single-chamber air-dryers, twin chamber air-dryers, multiple circuit protection valves, air-processing units and electronic air processing units, in particular in commercial vehicles.

Check valves, also referred to as non-return valves, reflux valves, retention valves, foot valves or one-way valves are valves that normally allow a fluid, such as a liquid or a gas or gas mixure, to flow through it in only one direction, namely from an input or inlet port of the check valve to an output or outlet port thereof.

In general check valves are known from different documents like EP 3 680 484 A1, JP S50 28031 A, US 4 489 752, JP 2012 007639 A, JP S51 17828 U, CN 110 513 514 A, US 6 443 182 B1, KR 100 985 814 B1, US 2013/312853 A1 and EP 1 798 351 A2.

Document CA 2557018 C describes a check valve for use in a fluid system. A valve body, or valve housing, has an inlet end or port, a valve cavity o through opening, and an outlet end or port. A valve enables a valve assembly to control the flow of fluid therethrough. A plug of the valve assembly includes tapered and non-tapered sections, the tapered section having a cross section that increases in diameter in a direction that is downstream from the inlet end of the valve body. A sealing ring is mounted to reciprocate on the non-tapered section and an elastomeric actuation ring, or elastic element, is mounted along the tapered section, which is configured as a guide section for the elastic element. The tapered section biases the actuation ring to a normal position, at which the actuation ring contacts and positions the sealing ring in contact with the valve body and the valve assembly to prevent fluid from flowing out the outlet end of the valve body.

Due to the check valve assembly being a spring-mass configuration, in many use scenarios, oscillations induced by the airflow going through the check valve appear. These oscillations are present as long as there is airflow. This causes, for instance, accelerated und thus premature wear of components, introducing unnecessary "false" movement cycles, and noise. In the case of check valves used in commercial vehicles, theses noises are in some cases amplified by the pneumatic system or other vehicle components and audible in vehicle's interior. A current solution for so-called "single" check valves is to provide some oscillation damping by mounting the elastic element in an eccentric manner, in relation to the check valve member, upstream of the valve seat. This causes a tilting of the check valve member and an increased friction on that region, that adds additional damping and prevents undesired oscillation. However, this solution may not work correctly for all airflow values and after some wear of the check valve member. Further, this cannot be easily applied to so-called "double" or dual check valves, as it is difficult to arrange the parts in relation to each other consistently and in a reproducible manner, leaving the possibility for random relative positions of the eccentric spring guide sections or spring mounts, thereby providing different (and in some cases insufficient) levels of oscillation damping for each of the check valves of the dual check valve.

It is an object of the present invention to provide a dual check valve with an improved damping effect for undesired oscillations due to the airflow.

According to the present invention, the object is obtained by a dual check valve according to claim 1.

The check valve comprises a check valve housing that defines a through opening for fluid flow between at least one inlet port and an outlet port. The check valve housing includes a retaining member, in particular for supporting an elastic element, and a valve seat. The check valve further comprises a check valve member that is arranged in the through opening and that is movable between a closed position and an open position to allow fluid flow in a flow direction from the inlet port to the outlet port. The check valve member has a sealing section arranged and configured to contact the valve seat in the closed position. An elastic element, in particular a spring element, is arranged between the sealing section of the check valve member and the retaining member. The check valve member comprises guide section extending downstream the sealing section towards the retaining member for guiding the elastic element.

An inner chamber is formed by the guide section and a chamber-forming element that is connected to the retaining member, such that a movement of the check valve member between the closed position and the open position varies a volume amount of the inner chamber. Further, the inner chamber comprises a venting passage for fluidly connecting the outlet port and the inner chamber.

With no fluid flow at the inlet port, the check valve member is kept in its closed position by the elastic member and the sealing section of the check valve member is in contact with the valve seat of the check valve housing. When the fluid flow increases, pressure on the sealing section starts to build up. Once the pressure value exceeds a predetermined threshold, which depends mainly on the elastic element, the elastic element is compressed, opening a flow path between the sealing section and the valve seat that fluidly connects the inlet port and the outlet port and which results in the check valve member shifting from the closed position to an open position.

The inner chamber, that has walls formed by the guide section and by the chamber-forming element, which are movable relative to each other, has a variable volume amount. The volume amount of the fluid filled inner chamber decreases when the check valve member moves from the closed position to the open position which provides a damping effect based on the resistance to the movement of the valve member. The magnitude of said damping effect can be advantageously modulated by adjusting the size of the venting passage, in particular a cross section thereof. A passage enabling a larger fluid flow through it provides less damping than a passage enabling a smaller fluid flow.

Thus, the check valve according to the first, not claimed aspect provides an improved and controllable damping effect for undesired oscillations due to the fluid flow, in particular airflow.

In the following, developments of the check valve of the first, not claimed aspect will be described.

In a development, the check valve further comprises a chamber sealing member, in particular a toric joint or o-ring, that is configured and arranged to tightly contact the guide section and the chamber-forming element. The presence of the sealing member further provides another variable for adjusting the damping effect of the check valve, namely the compression of the sealing member between the guide section and the chamber-forming element, that causes additional friction when the two parts that form the inner chamber move one in relation to the other.

In another development, the sealing section comprises a valve-seat sealing member, in particular a toric joint or o-ring, that is arranged for tightly contacting the check valve housing in the closed position. In this development, possible leaks due to irregularities leading to gaps in the contact surface between the valve seat and the sealing section are reduced.

In yet another development the venting passage is arranged in the chamber-forming element. In another development, the venting passage is additionally, or alternatively arranged in the guide section, in particular in a peripheral wall thereof.

In a particular development, the guide section defines an inner volume and the chamber-forming element, in particular a proximal end thereof, is configured to be inserted in the inner volume. Alternatively, in another development, the chamber-forming element defines an inner volume and the guide section, in particular a distal end thereof, is configured to be inserted in the inner volume.

According to a second aspect of the present disclosure which corresponds to the invention, a dual check valve according to claim 1 is presented. A dual check valve is also referred to as two-way check valve and includes a first inlet port a second inlet port, as well as an outlet port. The dual check valve of the second aspect of the invention comprises a first check valve according to the first, not claimed aspect of the invention, for controlling a first fluid flow between the first inlet port and the outlet port and a second check valve, for controlling a second fluid flow between the second inlet port and the outlet port. In the dual check valve, a sealing section of the second check valve is configured as the retaining member of the first check valve. Analogously, the sealing section of the first check valve is configured as a retaining member of the second check valve, such that a single elastic element is shared by both the first and the second check valves, and rests on the sealing sections of both first and second check valves, each sealing section of a given check valve acting as a retaining member for the other check valve.

Thus, for example, when a first pressure amount substantially larger than the threshold value for compressing the spring element is present at the first inlet, and a second pressure amount substantially larger than the threshold value for compressing the spring element is present at the second inlet, the dual check valve is arranged to allow fluid flow from that inlet being subject to the largest pressure amount. Only in cases where the pressure amount present at both inlet ports is marginally above the threshold value may both inlets ports be connected simultaneously to the outlet port.

In the dual check valve of the second aspect, the inner chamber is formed by the guide section of the first check valve and the chamber-forming element that is connected to the guide section of the second check valve, such that a movement of the either the check valve member of the first check valve or of a check valve member of the second check valve, between the respective closed position and the respective open position, varies the volume amount of the inner chamber. Therefore, a single inner chamber is shared by both check valves. Thus, the dual check valve of the second aspect of the invention also provides an improved damping effect, regardless of which of the two possible fluid flows is currently open.

Therefore, the dual check valve of the second aspect shares the advantages of the check valve of the first, not claimed aspect of the invention and of any of its developments.

In the following, developments of the dual check valve of the second aspect will be described.

In a particular development of the dual check valve, the venting passage is arranged in the guide section of the first check valve. In another development, the venting passage is additionally or alternatively arranged in the second check valve, namely in the guide section of the second check valve that is acting as a retaining member in view of the first check valve.

In another development, the second check valve is also in accordance with the

first, not claimed aspect and further comprises an additional inner chamber that is formed by a guide section of the second check valve and the chamber-forming element, and which comprises a corresponding venting passage. Thus, in this development, the dual check valve includes two different inner chambers, whose volume amounts are variable in dependence on the operational state (open position or closed position) of each one of the first check valve and the second check valve.

Preferably, the two inner chambers are aligned along a given longitudinal direction and the dual check valve includes a chamber-forming element that is shared by both the first check valve and the second check valve, in particular as an intermediate piece that is in contact, but to fixed to, the guide sections of the first and the second check valves of the dual check valve of the second aspect of the invention.

In a development, the inventive dual check valve comprises a first chamber-sealing member, in particular a toric joint or o-ring, that is configured and arranged to tightly contact the guide section of the first check valve and the chamber-forming element.

In another development, the dual check valve additionally or alternatively comprises a second chamber-sealing member, in particular a toric joint or o-ring, that is configured and arranged to tightly contact the guide section of the second check valve and the chamber-forming element. By varying the size, e.g. the cross-sectional area of the venting passages, and the compression of the first and the second chamber sealing member, the damping effect provided by each of the two inner chamber can be adjusted.

In a particular development, the guide sections of the first check valve member and of the second check valve member define a respective first inner volume and second inner volume. In this development, the chamber-forming element, preferably configured as an intermediate piece, comprises a first end section and a second end section opposite the first end section, each configured to be inserted into a respective one of the first inner volume and second inner volume.

In another development, the chamber-forming element comprises a connecting passage for connecting the inner chamber of the first check valve and the additional inner chamber of the second check valve.

In yet another development the connecting passage has an opening fluidly connected to the outlet port, thereby forming the venting passage. The inner chambers may be additionally connected to the outlet port via additional venting passages.

The check valve of the first, not claimed aspect or the dual check valve of the second aspect of the invention can be advantageously used in air processing products for use in commercial vehicles, included, but not limited to, mechanically or electrically controlled air dryers, both with a single or a twin chamber, multi circuit protection valves, air processing unit, and electronic air processing units. These air processing products, including a check valve or a dual check valve in accordance with the first, not claimed or the second aspect of the invention, respectively, form further aspects of the invention.

It shall be understood that a preferred embodiment of the present invention can also be any combination of the dependent claims or above embodiments with the respective independent claim.

These and other aspects of the invention will be apparent from and elucidated with reference to the embodiments described hereinafter.

The embodiments are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regards to additions to the lessons immediately recognizable from the drawings, reference is made to the relevant state of the art. It should be borne in mind that numerous modifications and changes can be made to the form and detail of an embodiment without deviating from the general idea of the invention as defined by the appended claims. The features of the invention disclosed in the description, in the drawings and in the claims may be essential for the further development of the invention, either individually or in any combination.

The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

The following drawings show in:
Fig. 1 a schematic diagram of a cross section of a first, not claimed embodiment of a check valve;
Fig. 2 a schematic diagram of a cross section of a second, not claimed embodiment of a check valve;
Fig. 3 a schematic diagram of a cross section of a third, not claimed embodiment of a check valve;
Fig. 4 a schematic diagram of a cross section of a first embodiment of a dual check valve according to the invention;
Fig. 5 a schematic diagram of a cross section of a second embodiment of a dual check valve according to the invention;
Fig. 6 a schematic diagram of a cross section of a third embodiment of a dual check valve according to the invention;
Fig. 7 a schematic diagram of a cross section of a fourth embodiment of a dual check valve according to the invention;
Fig. 8 a schematic diagram of a cross section of a fifth embodiment of a dual check valve according to the invention;

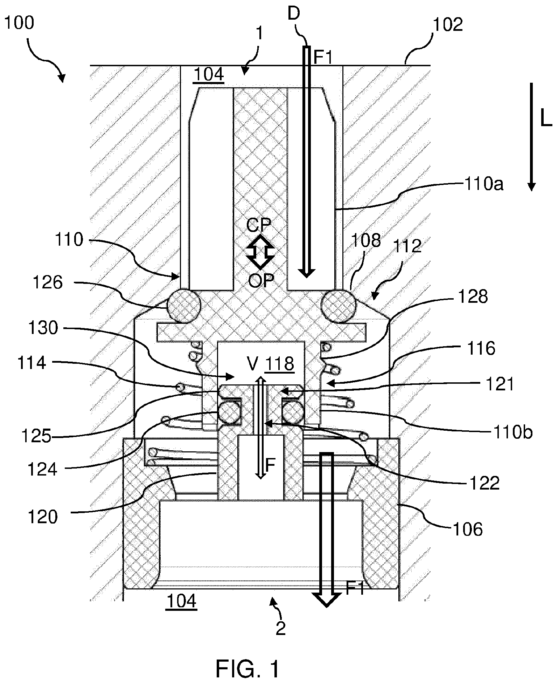

Fig. 1 shows a schematic diagram of a cross section of a first, not claimed embodiment of a check valve 100.

The check valve 100 comprises a check valve housing 102 that defines a through opening 104, in particular in a longitudinal direction **L,** for fluid flow, in particular air, between an inlet port 1 and an outlet port 2, located in this particular embodiment on opposite ends of the housing 102. The check valve housing 102 includes a retaining member for supporting an elastic member 114, and a valve seat 108. The retaining member 106 of the check valve 100 is fixed, preferably releasably fixed, to the check valve housing 102 and is configured to allow the flow of fluid F1 towards the output port 2. Further, the chamber-forming element is fixed, in particular releasably fixed to the retaining member 106.

The check valve 100 also includes a check valve member 110 that is arranged in the through opening 104 and that is movable between a closed position CP and an open position OP to allow fluid flow F1 in a flow direction D from the inlet port 1 to the outlet port 2. The check valve member 110 includes a proximal section 110a arranged, in a closed position CP, between the inlet port 1 and the valve seat 108, and a distal section 110b arranged, in a closed position CP, between the valve seat 108 and the retaining member 106. The check valve member 110 has a sealing section 112 that is arranged and configured to contact the valve seat 108 in the closed position CP, thus blocking a flow path between the inlet port 1 and the outlet port 2. In this particular embodiment, the check valve 100 comprises a valve-seat sealing member 126, in particular a toric joint or o-ring, that is arranged for tightly contacting the check valve housing 102 in the closed position CP thus preventing air leaks due to gaps in the contact surface between the valve seat 108 and the sealing section 112.

An elastic element 114, in particular a spring element, in this particular example a conical spring 114, is arranged between the sealing section 112 of the check valve member 110 and the retaining member 106 and contacting both the sealing section 112 and the retaining member 106. The diameter of the proximal end of the conical spring, which is in contact with the sealing section 112 is smaller than the diameter of the distal end of the conical spring 114, which is in contact with the retaining member 106. The check valve member 110, in particular the distal section 110b comprises or forms a guide section 116 for guiding the elastic element 114, said guide section extending downstream the sealing section 112 towards the retaining member 106 and arranged such that the elastic element 114 encircles or goes around the guide section 116 to prevent undesired lateral displacements of the spring element 114 with respect to the longitudinal direction L.

The check valve also comprises an inner chamber 118 that is formed by the guide section 116 and by a chamber-forming element 120 that is connected to the retaining member 106. This configuration, results in that a movement of the check valve member 110 between the closed position CP and the open position OP varies a volume amount V of the inner chamber 118, i.e., the chamber-forming element and the guide section are movable in respect to each other. Further, the inner chamber 118 comprises a venting passage 122 for fluidly connecting the outlet port 2 and the inner chamber 118, so that the fluid, in particular the air, may flow in and out of the inner chamber in dependence on the relative position of the guide section 116 and the chamber-forming element 120. The presence of the inner chamber 118 in fluid communication F with the outlet port 2 via the venting passage 122 allows for a damping effect of oscillations in the check valve which reduces accelerated and premature wear of the check valve housing 102 and/or the check valve member 110 and reduces the noise due to these oscillations. In the check valve 100, the venting passage 122 is arranged in the chamber-forming element 120.

Further, the check valve 100 comprises a chamber sealing member 124, in particular a toric joint or o-ring, that is configured and arranged to tightly contact the guide section 116 and the chamber-forming element 120. This offers and alternative variable for adjusting the damping effect, namely by adjusting the compression and the resulting friction between the guide section 116 and the chamber sealing member 124, that is held in position with respect to the chamber forming member 116 by, for instance arranging the chamber sealing member 124 between radial protrusions 125 on the chamber-forming member.

In the check valve 100 the guide section 116 has a peripheral wall 118 that defines an inner volume 130 and the chamber-forming element 120, in particular a proximal end 121 thereof is configured to be inserted in the inner volume 130.

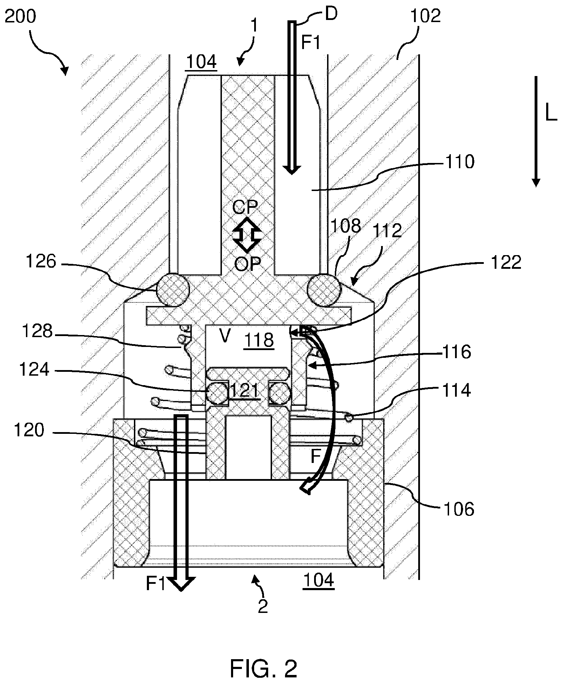

Fig. 2 shows a schematic diagram of a cross section of a second, not claimed embodiment of a check valve 200**.**

The following discussion will focus on those technical features that are different when comparing the check valve 100 of Fig. 1 and the check valve 200 of Fig. 1. All those technical features having identical or similar functions will be referred to using the same reference numbers as those used in Fig. 1. In the check valve 200, the venting passage 122 for establishing a fluid communication F between the inner chamber 118 and the output port is arranged on a peripheral wall 128 of the guide section 116.

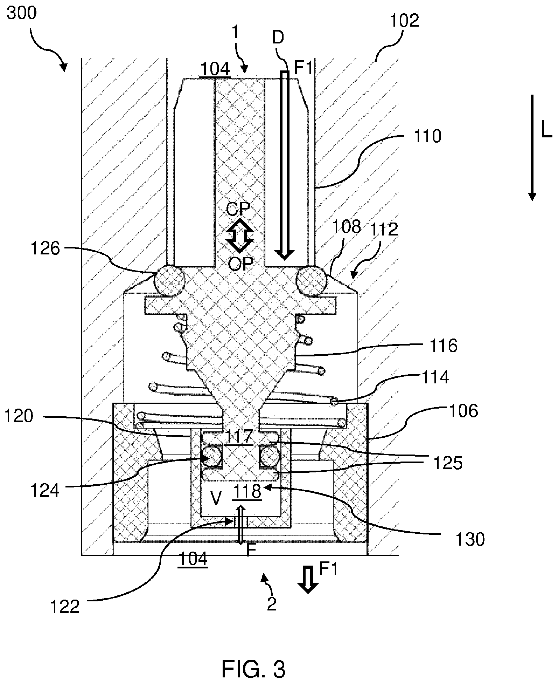

Fig. 3 shows a schematic diagram of a cross section of a third, not claimed embodiment of a check valve.

The following discussion will focus on those technical features that are different when comparing the check valve 100 and 200 of Fig. 1 and Fig. 2 respectively to the check valve 300 of Fig. 3. All those technical features having identical or similar functions will be referred to using the same reference numbers as those used in Figures 1 and 2. In the check valve 300, the chamber-forming element 120 defines an inner volume 130 the guide section 116, in particular a distal end thereof 117 is configured to be inserted in the inner volume 130. In the check valve 300, the chamber sealing member 124, in particular a toric joint, which is configured and arranged to tightly contact the guide section 116 and the chamber-forming element 120 is kept in a fixed position with respect to the distal end 117 of the guide section 116 by annular or radial protrusions 125 in the guide section. As in the check valve 100 of Fig. 1, the venting passage is arranged in the chamber-forming element 120. Alternatively, in another embodiment (not shown), the venting passage is arranged in the guide section and bridges the chamber sealing member.

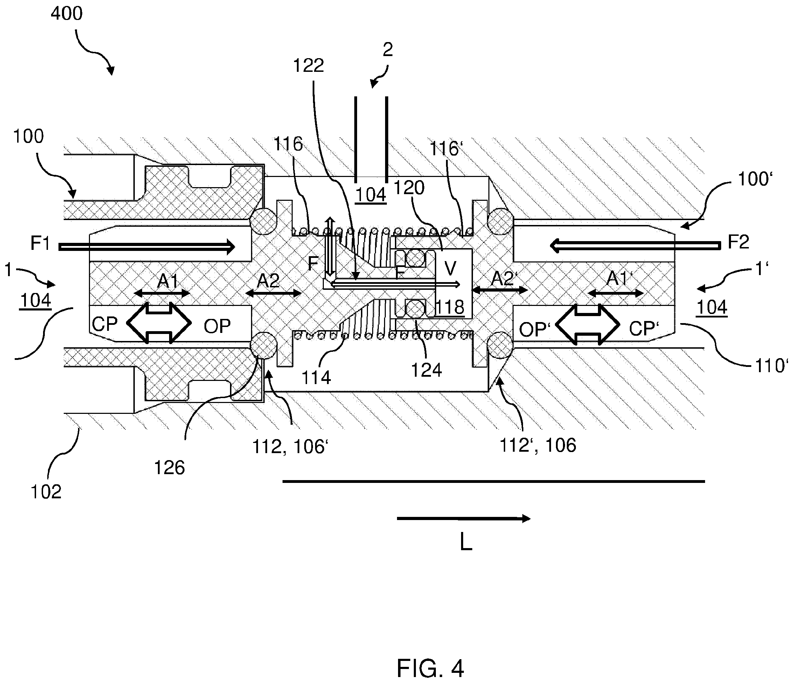

Fig. 4 shows a schematic diagram of a cross section of a first embodiment of a dual check valve according to the invention. All those technical features of the dual check valve 400 having identical or similar functions to those described with respect to the check valves 100, 200 and 300 of Figs. 1 to 3 be referred to using the same reference numbers.

The housing 102 of the dual check valve 400 comprises two inlet ports 1, 1' and one outlet port 2. The dual check valve 400 comprises a first check valve 100 according to the invention, for controlling a first fluid flow F1 between the first inlet port 1 and the outlet port 2, and a second check valve 100', for controlling a second fluid flow F2 between the second inlet port 1' and the outlet port 2. In the dual check valve 400, a sealing section 112' of the second check valve 100' is configured as the retaining member 106 of the first check valve 100, i.e., when the first check valve 100 is fully open, the sealing section 122' of the second check valve 100' is kept at a fixed position with respect to the housing 102, unless enough pressure is applied on the second inlet port 1' to drive the second check valve 100' in the open position. Analogously, the sealing section 112 of the first check valve 100 is configured as a retaining member 106' of the second check valve 100', i.e., when the second check valve 100' is fully open, the sealing section 122 of the first check valve 100 is kept at a fixed position with respect to the housing 102, unless enough pressure is applied on the first inlet port 1 to drive the first check valve 100 in the open position.

In the dual check valve 400, a single elastic element 114, in this case a cylindrical spring, is shared by both the first check valve 100 and the second check valve 100'. In the dual check valve 400, the inner chamber 118 is formed by the guide section 116 of the first check valve 100 and the chamber-forming element 120 that is connected to a guide section 116' of the second check valve 100', which are movable with respect to each other. Thus, a movement of the either the check valve member 110 of the first check valve 100 or of a check valve member 110' of the second check valve 100', in the longitudinal direction L, between the respective closed position CP, CP' and the respective open position OP, OP', varies the volume amount V of the inner chamber 118.

The venting passage 122 in this particular embodiment is arranged in the guide section 116 of the first check valve 100 and allows a flow F of fluid between the outlet port 2 and the inner chamber 118.

In the dual check valve 400, an axis A1 of the proximal end (respect to the flow F1) of the check valve member 110 is aligned with an axis A2 of the distal section, or guide section 116 of the check valve member 110 of the first check valve 100. Further, these axis A1, A2 are also aligned with an axis A1' of the proximal end (respect to the flow F2) of the check valve member 110' and with an axis A2' of the distal section, or guide section 116' of the check valve member 110' of the second check valve 100'.

The cylindrical spring 114 rests on the sealing sections 112, 112' of both first and second check valves 100, 100', each sealing section 112, 112' of a given check valve 100, 100' acting as a retaining member 106', 106 for the other check valve 100', 100. Thus, for example, when a first pressure amount substantially larger than the threshold value for compressing the spring element 114 is present at the first inlet 1, and a second pressure amount substantially larger than the threshold value for compressing the spring element 114 is present at the second inlet 1', the dual check valve 400 is arranged to allow fluid flow from that inlet being subject to the largest pressure amount. Only in cases where the pressure amount present at both inlet ports 1 and 1' is marginally above the threshold value, may both inlets ports be connected simultaneously to the outlet port 2.

In the dual check valve 400 of Fig. 4, both check valves 100, 100' comprises a valve-seat sealing member 126, 126', in particular a toric joint or o-ring, arranged for tightly contacting the check valve housing 102 in the closed position CP, CP'. Also, the dual check valve 400 comprises a chamber sealing member 124, in particular a toric joint or o-ring, that is configured and arranged to tightly contact the guide section 116 and the chamber-forming element 120, which, in this embodiment, is formed by the guide section 116' of the second check valve 100'.

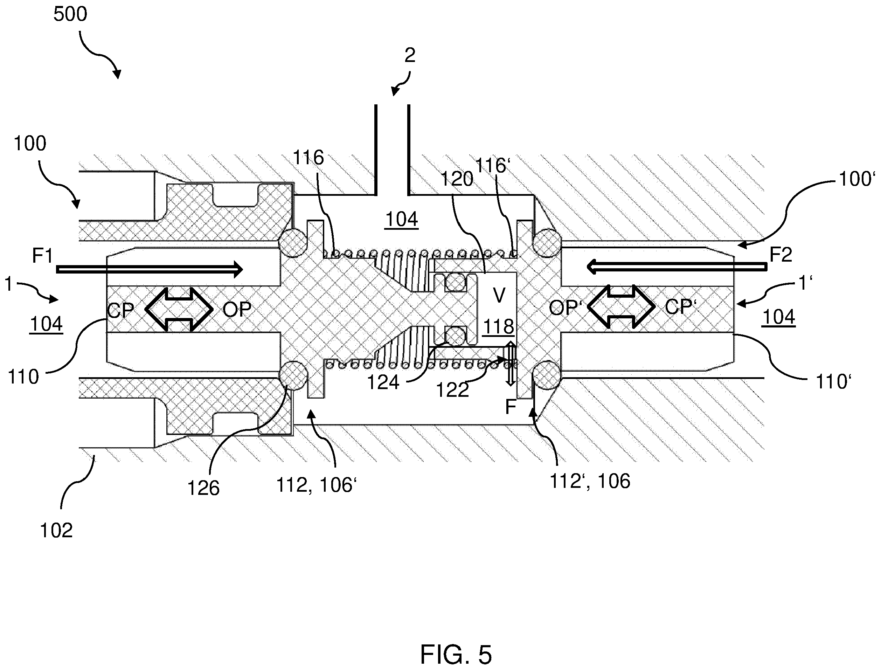

Fig. 5 shows a schematic diagram of a cross section of a second embodiment of a dual check valve 500 according to the invention. The following discussion will focus on those technical features that are different when comparing the dual check valve 400 of Fig. 4 and the dual check valve 500 of Fig. 5. All those technical features having identical or similar functions in both the dual check valve 400 and the dual check valve 500 will be referred to using the same reference numbers.

In the dual check valve 500 of Fig. 5, the venting passage 22 is arranged in the chamber-forming element 120 of the first check valve 100, which is, in this particular embodiment, the guide section 116' of the second check valve 100'.

In the dual check valves 400 and 500 the chamber-forming elements 120 define an inner volume and the guide sections 116 are configured to be inserted in said the inner volume.

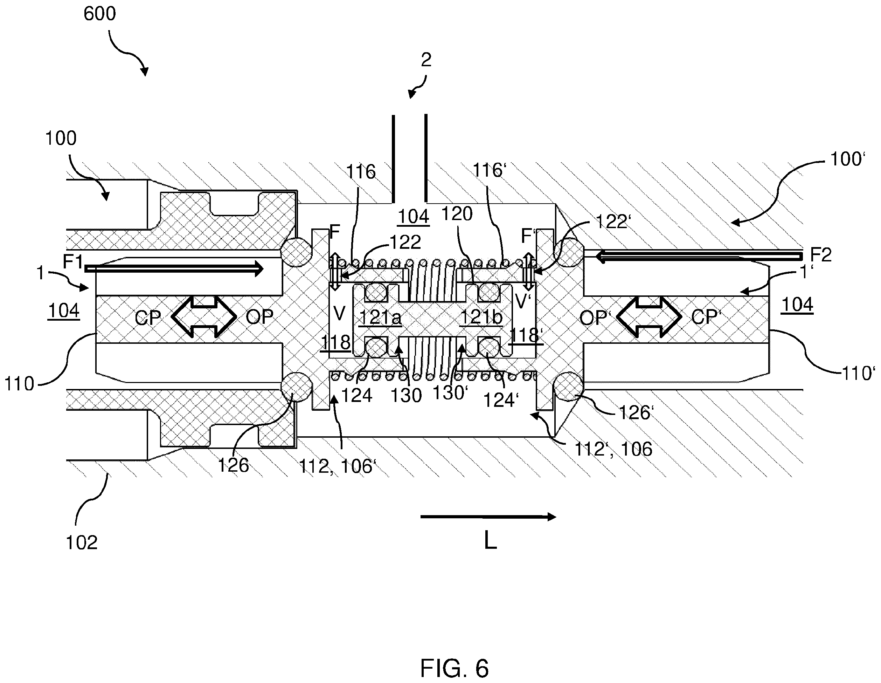

Fig. 6 shows a schematic diagram of a cross section of a third embodiment of a dual check valve 600 according to the invention. The following discussion will focus on those technical features that are different when comparing the dual check valves 400, 500 of Figs. 4 and 5 and the check valve 600 of Fig. 6. All those technical features having identical or similar functions will be referred to using the same reference numbers.

In the dual check valve 600 the second check valve 100' further comprises an additional inner chamber 118' that is formed by the guide section 116' of the second check valve 100' and the chamber-forming element 120. The chamber-forming element 120 is, in this particular embodiment, an intermediate piece that is movable with respect to the guide sections 116 and 116'. This intermediate piece is in contact, but not fixed to, the guide sections 116, 116', which form the retaining members 106', 106 of the second check valve 100' and the first check valve 100 respectively. The additional inner chamber 118' has a corresponding venting passage 122' connecting it to the outlet port 2.

The check valve 600 comprises a first chamber-sealing member 124, in particular a toric joint or o-ring, that is configured and arranged to tightly contact the guide section 116 of the first check valve 120 and the chamber-forming element 120. Additionally, a second chamber-sealing member 124', in particular a toric joint or o-ring, is configured and arranged to tightly contact the guide section 116' of the second check valve 100' and the chamber-forming element 120.

In the dual check valve 600, the guide sections 116, 116' of the first check valve member 110 and of the second check valve member 110' define a respective first inner volume 130 and second inner volume 130'. The chamber-forming element 120 comprises a first end section 120a and a second end section 120b opposite the first end section 120a, each configured to be inserted into a respective one of the first inner volume 130 and second inner volume 130'. In this particular embodiment the venting passages are 122 and 122' are arranged in the guide section 116, 116' of the respective valve.

When pressure is applied on one inlet port, for instance inlet port 1, for actuating check valve 100 and opening a flow path F1 between the inlet port 1 and the outlet port 2, the volume amount V, V' of the inner chambers 118, 118' will vary in dependence on the cross section of the respective venting passages 122, 122' and on the friction exerted by the respective chamber sealing members 124, 124'.

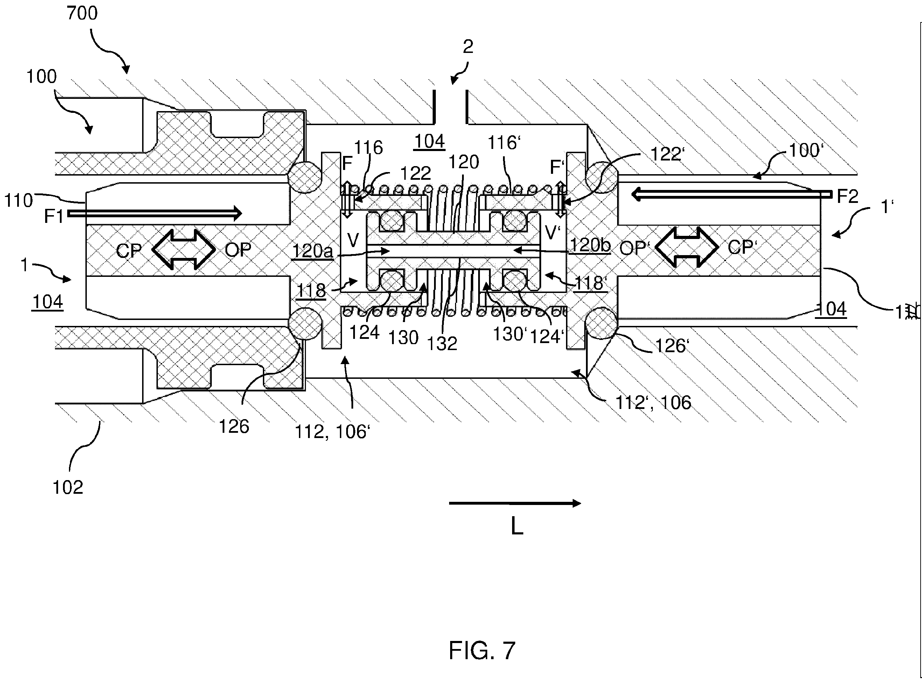

Fig. 7 shows a schematic diagram of a cross section of a fourth embodiment of a dual check valve 700 according to the invention. The following discussion will focus on those technical features that are different when comparing the dual check valves 400, 500 and 600 of Figs. 4, 5 and 6 to the check valve 700 of Fig. 7. All those technical features having identical or similar functions will be referred to using the same reference numbers.

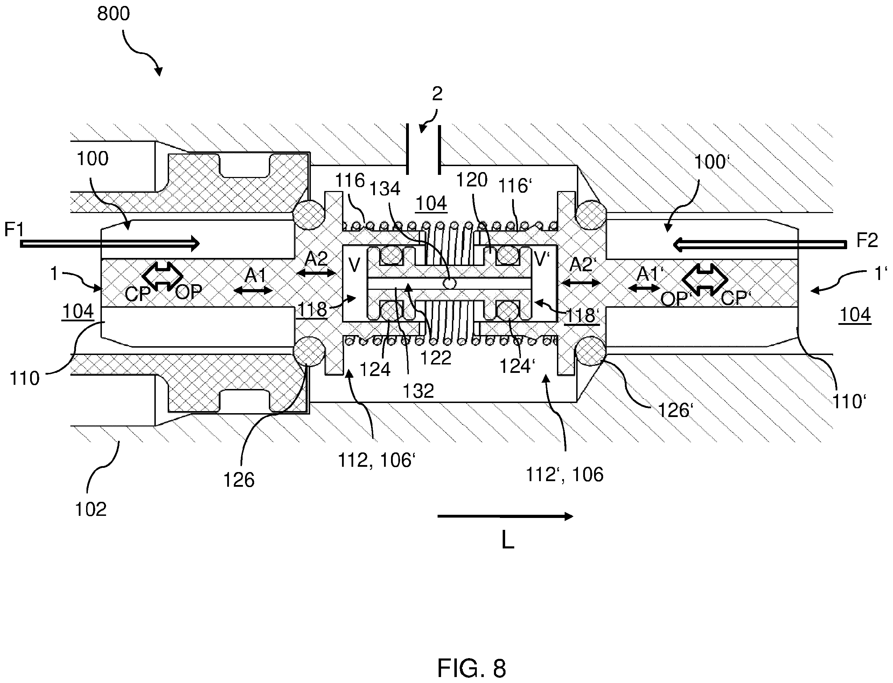

In the dual check valve 700, the chamber-forming element 120, also configured as an intermediate piece, comprises a connecting passage 132 for connecting the inner chamber 118 of the first check valve 100 and the inner chamber 118' of the second check valve 100'. Thus, fluid, in particular air, from inner chamber 118 may be exhausted to the outlet port 2 via the venting passage 122 or via the connecting passage 132, the inner chamber 118' and the venting passage 122'. The same applies, mutatis mutandis, to the fluid from inner chamber 118'. Fig. 8 shows a schematic diagram of a cross section of a fifth embodiment of a dual check valve according to the invention. The following discussion will focus on those technical features that are different when comparing the dual check valve 700 of Fig. 7 to the check valve 800 of Fig. 8. All those technical features having identical or similar functions will be referred to using the same reference numbers.

In the dual check valve 800, an axis A1 of the proximal end (respect to the flow F1) of the check valve member 110 is not aligned with an axis A2 of the distal section, or guide section 116 of the check valve member 110 of the first check valve 100. Further, an axis A1' of the proximal end (respect to the flow F2) of the check valve member 110' is not aligned with an axis A2' of the distal section, or guide section 116' of the check valve member 110' of the second check valve 100'. However, the axis A1 is aligned with axis A1' and the axis A2 is aligned with the axis A2'. Thus, each of the check valves 100, 100' is configured eccentrically.

Additionally, in the dual check valve 800, there is no venting passage arranged in the guide sections 116, 116'. The connecting passage 132 that connects the inner chamber 118 to the inner chamber 118' has an opening 134 fluidly connected to the outlet port 2 and to both inner chambers 118, 118' thereby forming a common venting passage 122 for both inner chambers 118, 118'.

In summary, the invention is directed to a dual check valve with an improved damping effect. At least one of the check valves comprises a housing for fluid flow between an inlet port and an outlet port, a valve member being movable between a closed position and an open position having a sealing section arranged and configured to contact a valve seat in the closed position, an elastic element arranged between the sealing section and a retaining member, wherein the check valve member comprises a guide section extending downstream the sealing section. An inner chamber is formed by the guide section and a chamber-forming element, such that a movement of the check valve member varies a volume amount of the inner chamber. The inner chamber comprises a venting passage for fluidly connecting the outlet port to the inner chamber.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### LIST OF REFERENCE NUMBERS (PART OF THE DESCRIPTION)

- 1, 1': Inlet port
- 2: Outlet port
- 100, 100' 200, 300,: Check valve
- 102: Check valve housing
- 104: Through opening
- 106: Retaining member
- 108: Valve seat
- 110: Check valve member
- 110a: Proximal section of check valve member
- 110b: Distal section of the check valve member
- 112, 112': Sealing section
- 114: Elastic element, spring element
- 116: Guide section for guiding elastic element
- 117: Distal end of guide section
- 118: Inner chamber
- 120: Chamber-forming element
- 121, 121a, 121b: Proximal end of chamber forming element
- 122, 122': Venting passage
- 124, 124': Chamber sealing member, toric joint
- 125: Radial / annular protrusions
- 126, 126': Valve-seat sealing member, toric joint
- 128: Peripheral wall of guide section
- 130, 130': Inner volume
- 132: Passage
- 132: Opening
- 400, 500, 600, 700, 800: Dual check valve
- A1, A1': Axis of proximal section of check valve member
- A2, A2': Axis of distal section of check valve member
- CP, CP': Closed position of check valve
- D: Flow direction
- F, F', F1, F2: Fluid flow
- L: Longitudinal direction
- OP. OP': Open position of check valve
- V, V': Volume amount

## Claims

1. A dual check valve (400, 500) having a first inlet port (1) a second inlet port (1') and an outlet port (2), the dual check valve (400, 500) comprising:
- a first check valve (100) for controlling a first fluid flow (F1) between the first inlet port (1) and the outlet port (2); and
- a second check valve (100'), for controlling a second fluid flow (F2) between the second inlet port (1') and the outlet port (2);
- the first check valve (100, 200, 300), comprising
* a check valve housing (102) defining a through opening (104) for fluid flow (F1) between at least one inlet port (1) and an outlet port (2), the check valve housing (102) including a retaining member (106) and a valve seat (108);
* a check valve member (110) arranged in the through opening (104) and being movable between a closed position (CP) and an open position (OP) to allow fluid flow (F1) in a flow direction (D) from the inlet port (1) to the outlet port (2), the check valve member (110) having a sealing section (112) arranged and configured to contact the valve seat (108) in the closed position (CP);
* an elastic element (114), in particular a spring element, arranged between the sealing section (112) of the check valve member (110) and the retaining member (106);
wherein the check valve member (110) comprises a guide section (116) extending downstream the sealing section (112) towards the retaining member (106) for guiding the elastic element (114);
wherein an inner chamber (118) is formed by the guide section (116) and a chamber-forming element (120) connected to the retaining member (106), such that a movement of the check valve member (110) between the closed position (CP) and the open position (OP) varies a volume amount (V) of the inner chamber (118);
wherein the inner chamber (118) comprises a venting passage (122) for fluidly connecting the outlet port (2) to the inner chamber (118);
**characterized in that**
a sealing section (112') of the second check valve (100') is configured as the retaining member (106) of the first check valve (100) and wherein the sealing section (112) of the first check valve (100) is configured as a retaining member (106') of the second check valve (100'), such that a single elastic element (114) is shared by both the first check valve (100) and the second check valve (100'); and
**in that** the inner chamber (118) is formed by the guide section (116) of the first check valve (100) and the chamber-forming element (120) that is connected to a guide section (116') of the second check valve (100'), such that a movement of the either the check valve member (110) of the first check valve (100) or of a check valve member (110') of the second check valve (100'), between the respective closed position (CP, CP') and the respective open position (OP, OP'), varies the volume amount (V) of the inner chamber (118).

2. The dual check valve (500) of claim 1, wherein the venting passage (122) is arranged in the guide section (116) of the first check valve (100).

3. The dual check valve (500) of claim 1 or 2, wherein the venting passage (122) is arranged in the second check valve (100'), namely in the guide section (116') of the second check valve (110').

4. The dual check valve (600) of any of the preceding claims 1 to 3, wherein the second check valve (100') further comprises an additional inner chamber (118') formed by the guide section (116') of the second check valve (100') and the chamber-forming element (120) and having a corresponding venting passage (122').

5. The dual check valve (600) of claim 4, further comprising a first chamber-sealing member (124), in particular a toric joint (124), that is configured and arranged to tightly contact the guide section (116) of the first check valve (120) and the chamber-forming element (120) and, preferably, a second chamber-sealing member (124'), in particular a toric joint (124'), that is configured and arranged to tightly contact the guide section (116') of the second check valve (100') and the chamber-forming element (120).

6. The dual check valve (600) of claim 4 or 5 wherein the guide sections (116, 116') of the first check valve member (110) and of the second check valve member (110') define a respective first inner volume (130) and second inner volume (130') and wherein the chamber-forming element (120) comprises a first end section (120a) and a second end section (120b), each configured to be inserted into a respective one of the first inner volume (130) and second inner volume (130').

7. The dual check valve (700) of claim 6, wherein the chamber-forming element (120) comprises a connecting passage (132) for connecting the inner chamber (118) of the first check valve (100) and the inner chamber (118') of the second check valve (100').

8. The dual check valve (800) of claim 7, wherein the connecting passage (132) has an opening (134) fluidly connected to the outlet port (2), thereby forming the venting passage (122).

## Patentansprüche

1. Doppelrückschlagventil (400, 500), das eine erste Einlassöffnung (1), eine zweite Einlassöffnung (1') und eine Auslassöffnung (2) aufweist, das Doppelrückschlagventil (400, 500) umfassend:
- ein erstes Rückschlagventil (100) zum Steuern eines ersten Fluidstroms (F1) zwischen der ersten Einlassöffnung (1) und der Auslassöffnung (2); und
- ein zweites Rückschlagventil (100') zum Steuern eines zweiten Fluidstroms (F2) zwischen der zweiten Einlassöffnung (1') und der Auslassöffnung (2);
- das erste Rückschlagventil (100, 200, 300), umfassend
* ein Rückschlagventilgehäuse (102), das einen Durchgangsspalt (104) für den Fluidstrom (F1) zwischen mindestens einer Einlassöffnung (1) und einer Auslassöffnung (2) definiert, wobei das Rückschlagventilgehäuse (102) ein Halteglied (106) und einen Ventilsitz (108) einschließt;
* ein Rückschlagventilglied (110), das in dem Durchgangsspalt (104) angeordnet ist und zwischen einer geschlossenen Position (CP) und einer offenen Position (OP) bewegbar ist, um den Fluidstrom (F1) in einer Stromrichtung (D) von der Einlassöffnung (1) zu der Auslassöffnung (2) zu ermöglichen, wobei das Rückschlagventilglied (110) einen Dichtungsabschnitt (112) aufweist, der angeordnet und konfiguriert ist, um in der geschlossenen Position (CP) den Ventilsitz (108) zu berühren;
* ein elastisches Element (114), insbesondere ein Federelement, das zwischen dem Dichtungsabschnitt (112) des Rückschlagventilglieds (110) und dem Halteglied (106) angeordnet ist;
wobei das Rückschlagventilglied (110) einen Führungsabschnitt (116) umfasst, der sich dem Dichtungsabschnitt (112) nachgelagert in Richtung des Halteglieds (106) zum Führen des elastischen Elements (114) erstreckt;
wobei eine Innenkammer (118) durch den Führungsabschnitt (116) und ein eine Kammer ausbildendes Element (120) ausgebildet wird, das mit dem Halteglied (106) derart verbunden ist, dass eine Bewegung des Rückschlagventilglieds (110) zwischen der geschlossenen Position (CP) und der offenen Position (OP) eine Volumenmenge (V) der Innenkammer (118) variiert;
wobei die Innenkammer (118) einen Entlüftungskanal (122) zum fluidischen Verbinden der Auslassöffnung (2) mit der Innenkammer (118) umfasst;
**dadurch gekennzeichnet, dass** ein Dichtungsabschnitt (112') des zweiten Rückschlagventils (100') als das Halteglied (106) des ersten Rückschlagventils (100) konfiguriert ist, und wobei der Dichtungsabschnitt (112) des ersten Rückschlagventils (100) als ein Halteglied (106') des zweiten Rückschlagventils (100') derart konfiguriert ist, dass ein einzelnes elastisches Element (114) durch sowohl das erste Rückschlagventil (100) als auch das zweite Rückschlagventil (100') gemeinsam genutzt wird; und
dass die Innenkammer (118) durch den Führungsabschnitt (116) des ersten Rückschlagventils (100) und das eine Kammer ausbildende Element (120) ausgebildet wird, das mit einem Führungsabschnitt (116') des zweiten Rückschlagventils (100') derart verbunden ist, dass eine Bewegung entweder des Rückschlagventilglieds (110) des ersten Rückschlagventils (100) oder eines Rückschlagventilglieds (110') des zweiten Rückschlagventils (100') zwischen der jeweiligen geschlossenen Position (CP, CP') und der jeweiligen offenen Position (OP, OP') die Volumenmenge (V) der Innenkammer (118) variiert.

2. Doppelrückschlagventil (500) nach Anspruch 1, wobei der Entlüftungskanal (122) in dem Führungsabschnitt (116) des ersten Rückschlagventils (100) angeordnet ist.

3. Doppelrückschlagventil (500) nach Anspruch 1 oder 2, wobei der Entlüftungskanal (122) in dem zweiten Rückschlagventil (100'), und zwar in dem Führungsabschnitt (116') des zweiten Rückschlagventils (110'), angeordnet ist.

4. Doppelrückschlagventil (600) nach einem der vorstehenden Ansprüche 1 bis 3, wobei das zweite Rückschlagventil (100') ferner eine zusätzliche Innenkammer (118') umfasst, die durch den Führungsabschnitt (116') des zweiten Rückschlagventils (100') und das eine Kammer ausbildende Element (120) ausgebildet wird und einen entsprechenden Entlüftungskanal (122') aufweist.

5. Doppelrückschlagventil (600) nach Anspruch 4, ferner umfassend ein erstes eine Kammer abdichtendes Glied (124), insbesondere eine torische Verbindung (124), das/die konfiguriert und angeordnet ist, um den Führungsabschnitt (116) des ersten Rückschlagventils (120) und das eine Kammer ausbildende Element (120) dicht zu berühren, und vorzugsweise ein zweites eine Kammer abdichtendes Glied (124'), insbesondere eine torische Verbindung (124'), das/die konfiguriert und angeordnet ist, um den Führungsabschnitt (116') des zweiten Rückschlagventils (100') und das eine Kammer ausbildende Element (120) dicht zu berühren.

6. Doppelrückschlagventil (600) nach Anspruch 4 oder 5, wobei die Führungsabschnitte (116, 116') des ersten Rückschlagventilglieds (110) und des zweiten Rückschlagventilglieds (110') ein erstes Innenvolumen (130) beziehungsweise ein zweites Innenvolumen (130') definieren und wobei das eine Kammer ausbildende Element (120) einen ersten Endabschnitt (120a) und einen zweiten Endabschnitt (120b) umfasst, die jeweils konfiguriert sind, um in das erste Innenvolumen (130) beziehungsweise das zweite Innenvolumen (130') eingesetzt zu werden.

7. Doppelrückschlagventil (700) nach Anspruch 6, wobei das eine Kammer ausbildende Element (120) einen Verbindungskanal (132) zum Verbinden der Innenkammer (118) des ersten Rückschlagventils (100) und der Innenkammer (118') des zweiten Rückschlagventils (100') umfasst.

8. Doppelrückschlagventil (800) nach Anspruch 7, wobei der Verbindungskanal (132) einen Spalt (134) aufweist, der mit der Auslassöffnung (2) fluidisch verbunden ist, wobei dadurch der Entlüftungskanal (122) ausgebildet wird.

## Revendications

1. Clapet antiretour double (400, 500) ayant un premier orifice d'entrée (1) un second orifice d'entrée (1') et un orifice de sortie (2), le clapet antiretour double (400, 500) comprenant :
- un premier clapet antiretour (100) pour contrôler un premier écoulement de fluide (F1) entre le premier orifice d'entrée (1) et l'orifice de sortie (2) ; et
- un second clapet antiretour (100'), pour contrôler un second écoulement de fluide (F2) entre le second orifice d'entrée (1') et l'orifice de sortie (2) ;
- le premier clapet antiretour (100, 200, 300), comprenant
* un logement de clapet antiretour (102) définissant une ouverture de passage (104) pour l'écoulement de fluide (F1) entre au moins un orifice d'entrée (1) et un orifice de sortie (2), le logement de clapet antiretour (102) comportant un élément de retenue (106) et un siège de clapet (108) ;
* un élément de clapet antiretour (110) disposé dans l'ouverture de passage (104) et pouvant être déplacé entre une position fermée (CP) et une position ouverte (OP) pour permettre l'écoulement de fluide (F1) dans une direction d'écoulement (D) de l'orifice d'entrée (1) à l'orifice de sortie (2), l'élément de clapet antiretour (110) ayant une section d'étanchéité (112) disposée et configurée pour entrer en contact avec le siège de clapet (108) dans la position fermée (CP) ;
* un élément élastique (114), en particulier un élément à ressort, disposé entre la section d'étanchéité (112) de l'élément de clapet antiretour (110) et l'élément de retenue (106) ;
dans lequel l'élément de clapet antiretour (110) comprend une section de guidage (116) s'étendant en aval de la section d'étanchéité (112) vers l'élément de retenue (106) pour guider l'élément élastique (114) ;
dans lequel une chambre interne (118) est formée par la section de guidage (116) et un élément de formation de chambre (120) relié à l'élément de retenue (106), de telle sorte qu'un mouvement de l'élément de clapet antiretour (110) entre la position fermée (CP) et la position ouverte (OP) fait varier une quantité volumique (V) de la chambre interne (118) ;
dans lequel la chambre interne (118) comprend un passage d'aération (122) pour relier fluidiquement l'orifice de sortie (2) à la chambre interne (118) ;
**caractérisé en ce qu'**une section d'étanchéité (112') du second clapet antiretour (100') est configurée en tant que l'élément de retenue (106) du premier clapet antiretour (100) et dans lequel la section d'étanchéité (112) du premier clapet antiretour (100) est configurée en tant qu'élément de retenue (106') du second clapet antiretour (100'), de telle sorte qu'un élément élastique unique (114) est partagé à la fois par le premier clapet antiretour (100) et le second clapet antiretour (100') ; et
la chambre interne (118) est formée par la section de guidage (116) du premier clapet antiretour (100) et l'élément de formation de chambre (120) qui est relié à une section de guidage (116') du second clapet antiretour (100'), de telle sorte qu'un mouvement soit de l'élément de clapet antiretour (110) du premier clapet antiretour (100), soit d'un élément de clapet antiretour (110') du second clapet antiretour (100'), entre la position fermée respective (CP, CP') et la position ouverte respective (OP, OP'), fait varier la quantité volumique (V) de la chambre interne (118).

2. Clapet antiretour double (500) selon la revendication 1, dans lequel le passage d'aération (122) est disposé dans la section de guidage (116) du premier clapet antiretour (100).

3. Clapet antiretour double (500) selon la revendication 1 ou 2, dans lequel le passage d'aération (122) est disposé dans le second clapet antiretour (100'), à savoir dans la section de guidage (116') du second clapet antiretour (110').

4. Clapet antiretour double (600) de l'une quelconque des revendications 1 à 3 précédentes, dans lequel le second clapet antiretour (100') comprend en outre une chambre interne supplémentaire (118') formée par la section de guidage (116') du second clapet antiretour (100') et l'élément de formation de chambre (120) et ayant un passage d'aération (122') correspondant.

5. Clapet antiretour double (600) selon la revendication 4, comprenant en outre un premier élément d'étanchéité de chambre (124), en particulier un joint torique (124), qui est configuré et disposé pour entrer fermement en contact avec la section de guidage (116) du premier clapet antiretour (120) et l'élément de formation de chambre (120) et, de préférence, un second élément d'étanchéité de chambre (124'), en particulier un joint torique (124'), qui est configuré et disposé pour entrer fermement en contact avec la section de guidage (116') du second clapet antiretour (100') et l'élément de formation de chambre (120).

6. Clapet antiretour double (600) selon la revendication 4 ou 5 dans lequel les sections de guidage (116, 116') du premier élément de clapet antiretour (110) et du second élément de clapet antiretour (110') définissent un premier volume interne (130) et un second volume interne (130') respectifs et dans lequel l'élément de formation de chambre (120) comprend une première section d'extrémité (120a) et une seconde section d'extrémité (120b), chacune configurée pour être insérée dans un volume respectif du premier volume interne (130) et du second volume interne (130').

7. Clapet antiretour double (700) selon la revendication 6, dans lequel l'élément de formation de chambre (120) comprend un passage de raccordement (132) pour raccorder la chambre interne (118) du premier clapet antiretour (100) et la chambre interne (118') du second clapet antiretour (100').

8. Clapet antiretour double (800) selon la revendication 7, dans lequel le passage de raccordement (132) a une ouverture (134) raccordée fluidiquement à l'orifice de sortie (2), formant de ce fait le passage d'aération (122).
